# EUROPÄISCHE PATENTSCHRIFT

(11) **EP 0 586 962 B1**
(45) Veröffentlichungstag und Bekanntmachung des Hinweises auf die Patenterteilung: **16.09.1998**
(21) Anmeldenummer: 93113547.9
(22) Anmeldetag: 25.08.1993
(51) Int. Cl.: A44B 18/00, B29C 43/22

(54) **Haftverschlussteil mit Haken und Vorrichtung zum Herstellen desselben**
Hooks fastener element for a mechanical fastening system and process of manufacture thereof
Elément de fermeture à crochets, pour un système de fermeture du type à crochets et à boucles ainsi que son procédé de fabrication

(30) Priorität: 01.09.1992 DE 4229062
(43) Veröffentlichungstag der Anmeldung: 16.03.1994
(73) Patentinhaber: GOTTLIEB BINDER GMBH & Co., 71088 Holzgerlingen (DE)
(72) Erfinder: Schulte, Axel, Dr. Dipl.-Ing., D-71088 Holzgerlingen (DE)
(74) Vertreter: Patentanwälte Bartels und Partner

(56) Entgegenhaltungen:
- EP-A- 0 024 196
- EP-A- 0 464 754
- WO-A-87/06522
- FR-A- 2 191 985
- FR-A- 2 602 285
- US-A- 3 266 113
- US-A- 3 762 000
- US-A- 3 781 398
- US-A- 3 825 391

## Beschreibung

Die Erfindung betrifft ein Haftverschlußteil mit den Merkmalen des Oberbegriffs des Anspruches 1 und eine Vorrichtung zur Herstellung desselben mit den Merkmalen des Oberbegriffs des Anspruches 11.

Aus der EP-B-267 193 ist eine Vorrichtung der eingangs genannten Art bekannt sowie ein Haftverschlußteil, der auf einer aktiven Seite eines flachen Trägers mit einer Vielzahl von biegsamen Haken versehen ist, die zum Verhaken mit Verhakungsmitteln eines zweiten Haftverschlußteils vorgesehen sind, wobei jeder Haken einen mit dem Träger verbundenen Fußteil aufweist und an seinem freien Ende zu einem Hakenteil gebogen ist, der eine Hakenebene definiert, und die so definierten Hakenebenen eine Schar von einander parallelen Ebenen bilden.

Der bekannte Haftverschlußteil ist aufgrund seiner Herstellung durch die obengenannte bekannte Vorrichtung bandförmig und die Hakenebenen sind alle parallel zur Längsachse des bandförmigen Haftverschlußteils. Dies ergibt sich aus der Konstruktion der bekannten Vorrichtung. Die Formwalze der bekannten Vorrichtung besteht aus auf die Walzenachse aufgeschichteten ersten und zweiten kreisförmigen Scheiben, von denen die ersten Scheiben als Formkörper auf ihren beiden ebenen Seiten mit die Hohlräume für die Haken bildenden Nuten versehen sind und die zweiten zwischen diesen Scheiben angeordneten Scheiben die Wände für die offenen Seiten der Nuten bilden. Bei diesem Aufbau der bekannten Vorrichtung müssen die Hakenebenen immer senkrecht zur Formwalzenachse und damit in Längsrichtung des bandförmigen Verschlußteiles verlaufen.

Die bekannten Haftverschlußteile haben durch diese Ausrichtung der Hakenebenen eine sehr richtungsabhängige Haftkraft bezüglich auftretender Scherkräfte.

In der EP-A-464 754 ist ein Haftverschlußteil der eingangs genannten Art beschrieben, bei dem einzelne Teilstücke des bandförmigen Haftverschlußteiles schachbrettartig so zusammengesetzt und auf eine Unterlage geklebt sind, daß die Hakenebenen des einen Teilstückes rechtwinklig zu den Hakenebenen der benachbarten Teilstücke verlaufen. Mit zunehmender Größe der Teilstücke bleibt jedoch die Richtungsabhängigkeit der Haftkräfte im Bereich der Teilstücke erhalten. Um diese Richtungsabhängigkeit möglichst klein zu halten, müssen daher die Teilstücke möglichst klein ausgebildet sein. Das führt jedoch zu einem sehr großen Herstellungsaufwand, da das mit der bekannten Vorrichtung hergestellte Haftverschlußband in kleine Teile zerschnitten und diese dann schachbrettartig auf die Unterlage geklebt werden müssen.

Der Erfindung liegt die Aufgabe zugrunde, einen Haftverschlußteil zu schaffen, dessen Haftkraft gegenüber Scherkräften nicht mehr richtungsabhängig ist.

Diese Aufgabe ist gemäß der Erfindung durch einen Haftverschlußteil mit den Merkmalen des Anspruchs 1 gelost. Dadurch wird erreicht, daß in verschiedenen Hakenebenen verlaufende Haken sehr nah beieinander angeordnet werden können, so daß eine im wesentlichen richtungsunabhängige Haftkraft für alle Einzelbereiche des Haftverschlußteils erreicht wird.

Die Herstellung des erfindungsgemäßen Haftverschlußteiles wird gemäß der Erfindung durch eine Vorrichtung zum Formen eines Verschlußteiles aus einem thermoplastischen Kunststoff ermöglicht, die die Merkmale der eingangs genannten bekannten Vorrichtung hat und bei der die Formwalze einen ein- oder mehrteiligen Grundkörper aufweist, der die Oberfläche der Walze bildet, die durch mindestens eine erste und eine zweite Schar von Nuten unterbrochen ist. Die Nuten einer jeden Schar sind einander parallel und die Nuten der ersten Schar schneiden sich mit den Nuten der zweiten Schar. In den Nuten sind diese ausfüllende Formkörper angeordnet, die mit in die Walzenoberfläche mündenden Aussparungen versehen sind, die einen dem Schnitt der Haken längs der Hakenebene entsprechenden Verlauf haben. Dadurch ist es möglich, die Hakenebenen entsprechend dem Verlauf der Nuten anzuordnen. Die Aussparungen in den Formkörpern können, wie bei der bekannten Vorrichtung als Nuten auf beiden Seiten der Formkörper ausgebildet sein.

Vorteilhaft und herstellungsmäßig einfacher ist es aber, diese Aussparungen als Durchbrüche auszuführen.

Bei einer vorteilhaften Ausführungsform der Erfindung ist vorgesehen, daß gedachte Mittelebenen, die zwischen den Seitenwänden der Nuten beider Scharen verlaufen, bei der ersten Schar die Walzenachse enthaltende Axialebenen und bei der zweiten Schar zur Walzenachse senkrechte Radialebenen sind, daß axiale Formkörper für die Axialnuten der ersten Schar gerade Streifen sind und in ihrem mit Bezug auf die Walzenachse einen Rand senkrecht zur Walzenachse verlaufende Schlitze aufweisen, daß radiale Formkörper für die um die Walzenachse umlaufenden Radialnuten der zweiten Schar entsprechend dem Verlauf der Radialnuten gebogene Streifen sind und an ihrem in Bezug auf die Walzenachse anderen Rand als bei den axialen Formkörpern mit zu den Schlitzen dieser komplementären Schlitze versehen sind, so daß die axialen und radialen Formkörper bei ihrem Sitz in den Nuten dank der Schlitze kammartig ineinandergreifen.

Bei einer anderen vorteilhaften Ausführungsform ist vorgesehen, daß gedachte Mittelebenen, die zwischen den Seitenwänden der Nuten der ersten Schar verlaufen, mit der Walzenachse einen ersten Winkel und die entsprechenden gedachten Mittelebenen der zweiten Schar mit der Walzenachse einen zweiten Winkel bilden, daß die Mittelebenen jeweils einer Schar in gleichen Abständen voneinander angeordnet sind und die Abstände in beiden Scharen so gewählt sind, daß die Schnittgeraden beider Scharen in Axialebenen liegen, die die Walzenachse enthalten, so daß die Nuten beider Scharen zickzackförmig verlaufende Axialnuten bilden, die von geraden, entsprechend zickzackförmig gebogenen Formkörpern ausgefüllt sind, die an ihren durch die Zickzackform gebildeten Ecken mit Abflachungen versehen sind.

Beide genannten Ausführungsformen ergeben einfache Bauformen für die Formwalze.

Die Erfindung ist in der folgenden Beschreibung von in der Zeichnung dargestellten Ausführungsbeispielen im einzelnen erläutert.

Es zeigen:
- Fig.1: eine vereinfachte und stark vergrößerte Draufsicht auf einen Teil der Hakenseite eines ersten Ausführungsbeispieles des erfindungsgemäßen Haftverschlußteiles;
- Fig.2: eine der Ansicht nach Fig.1 entsprechende Ansicht eines zweiten Ausführungsbeispieles;
- Fig.3: eine Seitenansicht eines Abschnittes eines Ringkörpers der Formwalze eines ersten Ausführungsbeispieles einer Vorrichtung zum Herstellen eines Haftverschlußteiles nach Fig.1;
- Fig.4: einen Schnitt nach der Linie IV - IV in Fig.3;
- Fig.5: eine Seitenansicht einer ringförmigen Scheibe des ersten Ausführungsbeispieles der Vorrichtung nach Fig.3 und 4;
- Fig.6: eine Seitenansicht eines Metallstreifens des ersten Ausführungsbeispieles der Vorrichtung nach Fig.3 bis 5;
- Fig.7: eine stark vergrößerte Draufsicht auf einen Teil der Oberflächenabwicklung der Formwalze des ersten Ausführungsbeispieles nach den Fig.3 bis 6;
- Fig.8: eine der Fig.7 entsprechende, jedoch gegenüber dieser verkleinerte Draufsicht auf einen Teil der Oberflächenabwicklung der Formwalze eines zweiten Ausführungsbeispieles der Vorrichtung zum Herstellen des Flächenverschlußteiles nach Fig.2;
- Fig.9: eine perspektivische Darstellung eines zickzackförmig gebogenen Metallstreifens des Ausführungsbeispieles nach Fig.8.

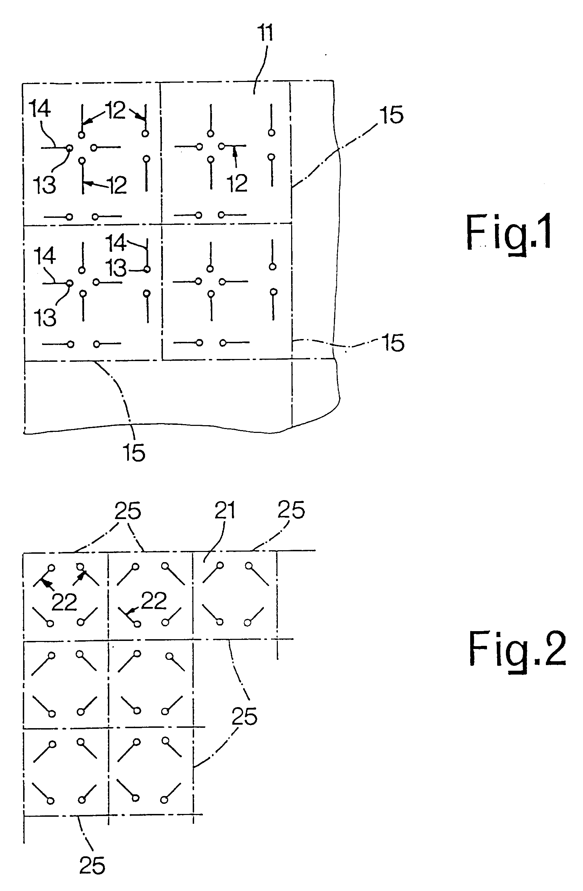

In Fig.1 ist die Draufsicht der aktiven Seite eines Haftverschlußteiles dargestellt. Dieser Haftverschlußteil weist einen bandförmigen Träger 11 auf, dessen Längsrichtung sich in Fig.1 von links nach rechts erstreckt. Die dem Betrachter von Fig.1 zugekehrte Seite des Trägers 11 ist mit als Ganzes mit 12 bezeichneten Haken besetzt. Jeder Haken besteht aus einem Fußteil 13, der in Fig.1 durch einen kleinen Kreis dargestellt ist, und einen Hakenteil 14, der in Fig.1 durch einen geraden Strich dargestellt ist. Wie aus Fig.1 ersichtlich ist, ergibt sich die Verteilung der Haken 12 auf der aktiven Seite des Verschlußteiles 11 durch einen, sich in Quer- und Längsrichtung wiederholenden quadratischen Rapport 15 von acht Haken 12, von denen die Hakenteile 14 von vier Haken in zwei einander parallelen, sich in Längsrichtung des bandförmigen Trägers erstreckenden Hakenebenen und die Hakenteile der vier anderen in zwei dazu senkrechten Hakenebenen erstrecken. Zur Verdeutlichung des Gesagten sind in Fig.1 vier Rapporte durch strichpunktierte Linien voneinander abgeteilt. Daraus ist ersichtlich, daß jeder Rapport eine quadratische Fläche mit acht Haken bildet. Die sich in Längsrichtung des bandförmigen Trägers erstreckenden Hakenebenen erstrecken sich über die ganze Länge des Bandes und bilden somit eine Schar von einander parallelen Hakenebenen. Die dazu senkrechten Hakenebenen erstrecken sich über die ganze Breite des bandförmigen Trägers 11 und bilden somit eine zweite Schar von einander parallelen Hakenebenen. Die Haken 12 nach Fig. 1 sind also auf längs und quer zum bandförmigen Träger verlaufenden Geraden angeordnet, wobei die Haken auf einer Geraden jeweils einer Hakenebene zugeordnet sind.

Durch die in Fig.1 dargestellte Verteilung der Haken wird eine möglichst gleichmäßige Haftwirkung gegenüber Scherkräften in beliebiger Richtung erreicht.

Eine gleiche Wirkung wird durch den Haftverschlußteil nach Fig.2 erreicht. Hier sind die Hakenteile der Haken 22 auf der aktiven Seite des Trägers 21 ebenfalls in zwei Scharen voneinander parallelen Hakenebenen angeordnet. Die Hakenebenen der einen Schar stehen zu den Hakenebenen der anderen Schar, wie bei dem Ausführungsbeispiel nach Fig. 1, in einem Winkel von 90°, sie bilden hier jedoch einen Winkel von 45° mit der Längsachse des bandförmigen Trägers 21. Jeder durch die strichpunktierten Linien abgeteilte Rapport 25 weist hier nur vier Haken auf, von denen sich jeweils zwei in der einen Richtung und die zwei anderen in einer dazu senkrechten Richtung erstrecken. Anders als bei dem ersten Ausführungsbeispiel sind die Haken 22 auf einer längs oder quer zum bandförmigen Träger verlaufenden Geraden abwechselnd verschiedenen Hakenebenenscharen zugeordnet.

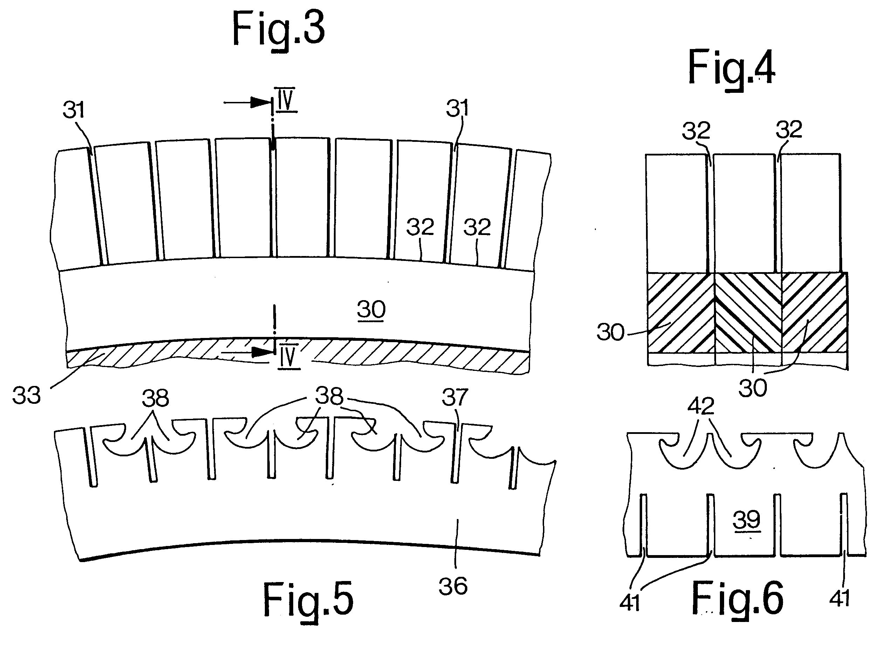

Die Vorrichtung zum Herstellen des Haftverschlußteiles nach Fig. 1 ist in den Fig. 3 bis 7 schematisch vereinfacht dargestellt. Diese Vorrichtung weist in bekannter Weise eine Druckwalze mit zylindrischer Oberfläche und eine gekühlte Formwalze auf, die zum Formen der mit Haken besetzten Seite des Verschlußteiles nach Fig. 1 mit nach außen offenen Hohlräumen versehen ist, die die Formen für die biegsamen Haken bilden. Diese beiden Walzen sind ebenfalls in bekannter Weise unter Bildung eines der Dicke des Trägers 11 des Haftverschlußteiles nach Fig. 1 entsprechend weiten Spaltes horizontal und parallel zueinander in entgegengesetztem Drehsinn drehbar gelagert. Da die Anzahl der den verschiedenen Hakenscharen zugeordneten Haken 12 und 22 in dem sich wiederholenden Rapport 15 bzw. 25 gleich ist, ist auch die Anzahl der den verschiedenen Hakenebenen-Scharen zugeordneten Haken des Verschlußteiles gleich groß.

Die Oberfläche der in der Zeichnung als Ganzes nicht dargestellten Formwalze ist durch in den Fig. 3 und 4 dargestellte

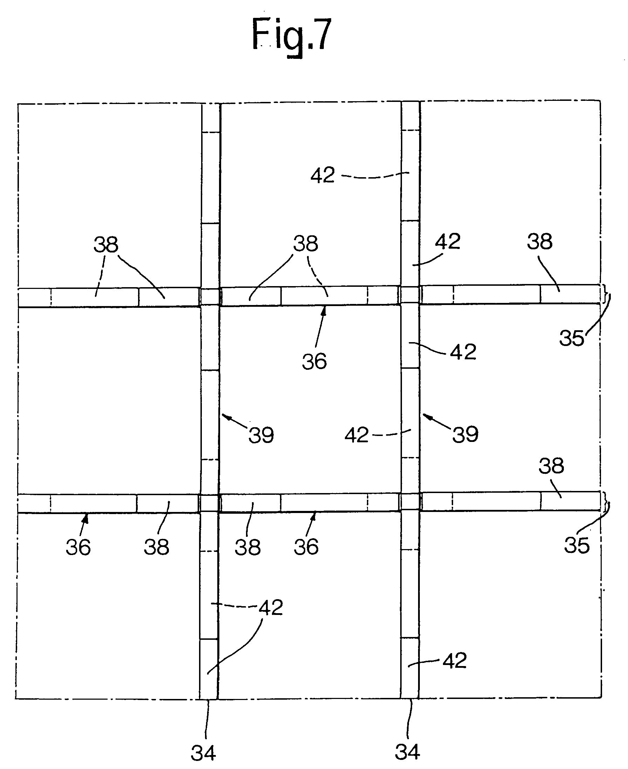

Ringkörper 30 gebildet, von denen jeder mit kammartig radial nach außen offenen axialen Einschnitten 31 und in Fig. 4 auf der rechten Seite mit umlaufenden radial nach außen offenen nutenartigen Vertiefungen 32 versehen ist. Um die ganze Oberfläche der Formwalze zu bilden, sind die Ringkörper auf einem zylindrischen Körper 33 so befestigt, daß sich die Einschnitte 31 decken und dadurch axial verlaufende Nuten 34 bilden. Die Abstände dieser Nuten 34 voneinander sind am ganzen Umfang mit der Walze gleich, so daß sich ein regelmäßiges System von in gleichem Abstand voneinander befindlichen axialen Nuten 34 ergibt, von denen in Fig. 7 zwei von oben nach unten verlaufend dargestellt sind. Hierbei bilden die Vertiefungen 32 in Fig. 7 von links nach rechts verlaufende, um die Formwalze umlaufende Radialnuten 35. Die einander zugekehrten Seitenwände der Einschnitte 31 sind einander parallel und befinden sich in einem Abstand voneinander, der der Tiefe der nutenartigen Vertiefungen 32 entspricht, so daß die von den Einschnitten 31 gebildeten Axialnuten 34 und die durch die Vertiefungen 32 gebildeten Radialnuten 35 eine über ihre ganze Tiefe gleichbleibende und gleiche Weite aufweisen.

Zum Ausfüllen der durch die Vertiefungen 32 gebildeten Radialnuten 35 sind als Formkörper ringförmige Metallscheiben 36 (Fig. 5) vorgesehen, deren Abmessungen genau den Abmessungen der durch die Vertiefung 32 gebildeten Radialnuten entsprechen. An ihrem radial äußeren Rand weisen die Metallscheiben 36 bis zur Mitte ihrer radialen Breite reichende Schlitze 37 mit über ihre ganze radiale Länge gleichbleibender Weite auf, die genau der Weite der axialen Einschnitte 31 entspricht. Auch die Abstände der Schlitze 37 voneinander sind an die Abstände der Einschnitte 31 angepaßt. Beim Zusammensetzen der Ringkörper 30 wird jeweils nach dem Aufsetzen eines Ringkörpers 30 auf den zylindrischen Körper 33 eine Metallscheibe 36 in die nutenartige Vertiefung 32 eingesetzt, so daß dadurch die ganze, durch diese nutenartige Vertiefung 32 gebildete Radialnut 35 von der Metallscheibe 36 ausgefüllt ist. Am radial äußeren Rand einer jeden Metallscheibe 36 sind als Aussparungen nach außen offene Durchbrüche 38 vorgesehen, die der Seitenansicht der beim Haftverschlußteil zu bildenden Haken entsprechen. Je zwei dieser Durchbrüche für in entgegengesezter Richtung gerichtete Haken bilden in Fig. 5 einen gemeinsamen Durchbruch, der jedoch, wie das im folgenden noch beschrieben wird, so unterbrochen wird, daß zwei voneinander getrennte Hohlräume für Haken 12 gebildet werden, die in der Längsrichtung des Haftbandes verlaufende Hakenebenen definieren.

Zum Ausfüllen der durch die axialen Einschnitte 31 gebildeten Axialnuten sind als Formkörper gerade Metallstreifen 39 vorgesehen, von denen ein abgebrochenes Stück in Fig. 6 dargestellt ist. Der in Fig. 6 untere Rand dieser Metallstreifen 39 ist mit den Schlitzen 37 genau entsprechenden sich ebenfalls bis zur Mitte der Breite des Metallstreifens 39 erstreckenden Schlitzen 41 versehen, deren Weiten und deren Abstände voneinander genau den Weiten und den Abständen voneinander der durch die Vertiefungen 32 gebildeten Radialnuten entsprechen. Auf der in Fig. 6 oberen Seite sind die Metallstreifen 39 mit Durchbrüchen 42 versehen, die den Seitenansichten von in diesen Durchbrüchen zu bildenden Haken entsprechen. Diese Metallstreifen werden in die Axialnuten 34 so eingesetzt, daß die Metallscheiben 36 in die Schlitze 41 eingreifen. Dadurch füllen die Metallstreifen 39 die Axialnuten 34 bis auf die durch die Durchbrüche 42 gebildeten hakenförmigen Hohlräume voll aus. Durch die jeweiligen Seitenwände der Axialnuten und der Radialnuten werden die Durchbrüche 38 und 42 seitlich begrenzt, so daß flache hakenförmige Hohlräume zur Bildung von entsprechend geformten Haken 12 gebildet werden, die senkrecht zur Breite des Haftbandes verlaufende Hakenebenen definieren.

Die in Fig. 7 dargestellte Abwicklung der Oberfläche der Formwalze zeigt die sich in Längsrichtung des Haftverschlußbandes erstreckenden Radialnuten 35 und die sich quer dazu erstreckenden Axialnuten 34. Die in den Axialnuten 34 steckenden Metallstreifen 39 unterbrechen die beiden an ihrem Fuß zusammenhängenden Durchbrüche 38. Aus Fig. 7 ist ersichtlich, wie sich beim Formen eines Verschlußbandes das in Fig. 1 dargestellte Muster der Haken ergibt, wobei jeweils die durchgezogenen Linien der Bezugszahlen 38 und 42 auf die Öffnungen der Hakenformen hinweisen, in denen die Endteile der Hakenfüße gebildet werden, die in Fig. 1 schematisch als Kreise 13 dargestellt sind.

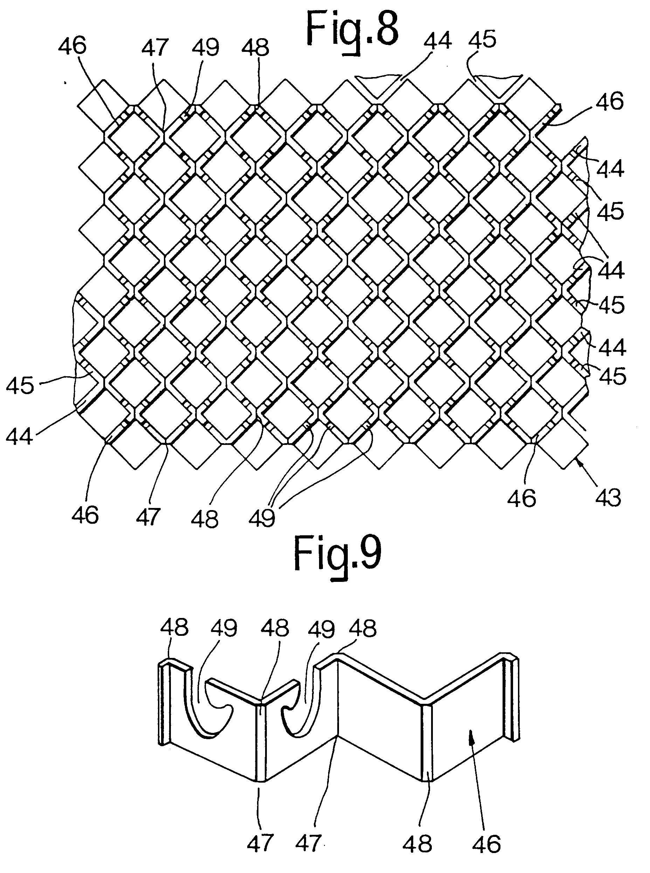

Die Figuren 8 und 9 illustrieren schematisch ein zweites Ausführungsbeispiel einer Formwalze zum Herstellen des mit Haken 22 besetzten bandförmigen Haftverschlußteiles nach Fig. 2.

Bei diesem Ausführungsbeispiel wird die Oberfläche der Formwalze von einem zylindrischen Grundkörper 43 gebildet, dessen Oberfläche durch eine erste Schar von Nuten 44 und eine zweite Schar von Nuten 45 unterbrochen ist. Die Nuten 44 der einen Schar sind einander parallel und ihre Mittelebenen bilden eine erste Schar von in der Zeichnung nicht dargestellten, gedachten Ebenen, die mit der Formwalzenachse einen Winkel von 45° bilden. Die Nuten 45 der zweiten Schar sind ebenfalls einander parallel, verlaufen jedoch senkrecht zu den Nuten der ersten Schar. Jede Mittelebene einer Nut der zweiten Schar bildet somit ebenfalls einen Winkel von 45° mit der Achse der Formwalze. Die Mittelebenen der ersten Schar sind in gleichen Abständen voneinander angeordnet. Das gleiche gilt für die Mittelebenen der zweiten Schar, wobei die Abstände der Mittelebene der zweiten Schar voneinander genau so groß sind, wie die Abstände der Mittelebenen der ersten Schar. Daraus ergibt sich, daß die radial verlaufenden gedachten Schnittgeraden der Mittelebene beider Scharen in Axialebenen liegen, die die Walzenachse enthalten und die Schnittpunkte dieser in einer Axialebene liegenden radialen Schnittgeraden jeweils in einer geraden Mantellinie der Formwalzenoberfläche liegen.

Wie das aus Fig.8 deutlich ersichtlich ist, bilden somit die sich kreuzenden Nuten der beiden Scharen axial, d.h. in Fig. 8 von oben nach unten verlaufende zickzackförmige Nuten, wobei einander benachbarte Nuten in den Eckbereichen ineinanderfließen. Diese Anordnung der sich kreuzenden Nuten auf der Oberfläche der Formwalze ergibt die Möglichkeit, in die zickzackförmigen Axialnuten als Formkörper gerade, jedoch zickzackförmig gebogene Metallstreifen 46 einzusetzen. Ein Abschnitt eines solchen Metallstreifens ist in Fig. 9 schaubildlich dargestellt. Die durch den zickzackförmigen Verlauf der Metallstreifen 46 gebildeten Ecken 47 sind auf ihrer jeweils äußeren Seite mit Abflachungen 48 versehen, so daß die Ecken eines jeden Metallstreifens die Eckbereiche der durch die Nuten 44 und 45 gebildeten zickzackförmigen Axialnuten nur zur Hälfte ausfüllen. Dies ergibt die Möglichkeit, daß die zickzackförmigen Metallstreifen 46 in einander benachbarte zickzackförmige Nuten eingesetzt werden können, wobei sich die einander benachbarten zickzackförmigen Metallstreifen 46 mit ihren Abflachungen 48 berühren und dadurch die Eckbereiche der zickzackförmigen Axialnuten voll ausfüllen.

Jeder der geraden Schenkel eines jeden Metallstreifens 46 ist mit je einem, eine Aussparung bildenden Durchbruch 49 versehen, der wie beim vorher beschriebenen Ausführungsbeispiel den Hohlraum einer Hakenform bildet. Zum Herstellen eines Haftverschlußteiles nach Fig. 2 sind die hakenförmigen Durchbrüche 49 in einander benachbarten, geradlinigen Schenkeln des zickzackförmigen Metallstreifens 46 mit ihren Hakenteilen in entgegengesetzten Richtungen ausgerichtet, so daß dadurch der Haftverschlußteil nach Fig. 2 entsteht. Eine bis zum nur aus 4 Haken bestehenden Rapport richtungsunabhängige Haftkraft kann auch durch andere in der Zeichnung nicht dargestellte Ausrichtungen der Haken erreicht werden.

Bei dem in den Fig. 8 und 9 dargestellten Ausführungsbeispiel sind die Winkel, die die Mittelebenen der Nuten der ersten und der zweiten Schar mit der Achse der Formwalze bilden gleich groß, nämlich = 45°. Die Nuten der einen und die Nuten der anderen Schar können jedoch auch mit der Achse der Formwalze verschieden große Winkel bilden. Durch eine einfache geometrische Überlegung kann man dann die für jede Schar gleichbleibenden Abstände der Mittelebenen der Nuten der einen Schar und der Nuten der anderen Schar so an die verschiedenen Winkel dieser Mittelebenen mit der Formwalzenachse anpassen, daß die Schnittgeraden der Mittelebenen beider Scharen in Axialebenen liegen und dadurch zick-zack-förmige,axial verlaufende Nuten mit verschieden langen geradlinigen Abschnitten gebildet werden.

Die vorstehende Beschreibung und die Zeichnungen beschränken sich nur auf die Angabe von Merkmalen, die im Zusammenhang für die Erfindung wesentlich sind. Soweit daher die Merkmale in der Beschreibung und auch nur in Zeichnung offenbart und in den Ansprüchen nicht genannt sind, sind sie zur Bestimmung des Gegenstandes der Erfindung dienlich.

## Patentansprüche

1. Haftverschlußteil,
a) der auf einer aktiven Seite eines flachen Trägers (11, 21) mit einer Vielzahl von biegsamen Haken (12, 22) versehen ist, die zum Verhaken mit Verhakungsmitteln eines zweiten Haftverschlußteils vorgesehen sind,
b) bei dem jeder Haken (12, 22) einen mit dem Träger (11, 21) verbundenen Fußteil (13) aufweist und an seinem freien Ende zu einem Hakenteil (14) gebogen ist, der eine Hakenebene definiert, und die so definierten Hakenebenen eine Schar von einander parallelen Ebenen bilden,
c) bei dem die Hakenteile (14) mindestens vier voneinander verschiedene Orientierungen aufweisen und mindestens zwei Scharen von Hakenebenen bilden, wobei die Hakenebenen der einen Schar mit einem Winkel zu den Hakenebenen der anderen Schar stehen,
d) bei dem die Haken (12, 22) in Gruppen (15, 25) angeordnet sind,
dadurch gekennzeichnet, daß die Hakenteile (14) der Haken (12, 22) jeder Gruppe (15, 25) die mindestens vier voneinander verschiedenen Orientierungen aufweisen.

2. Haftverschlußteil nach Anspruch 1, dadurch gekennzeichnet, daß der Winkel 90° beträgt.

3. Haftverschlußteil nach Anspruch 2, dadurch gekennzeichnet, daß der Träger (11, 21) bandförmig ist und die Hakenebenen sich in der Längs- und Querrichtung des Bandes erstrecken.

4. Haftverschlußteil nach Anspruch 2, dadurch gekennzeichnet, daß die Hakenebenen mit der Längsachse des Bandes einen Winkel von 45° bilden.

5. Haftverschlußteil nach dem Anspruch 3, dadurch gekennzeichnet, daß die einzelnen Haken (12, 22) auf Geraden angeordnet sind, die sich in der Querrichtung und in der Längsrichtung des Bandes erstrecken.

6. Haftverschlußteil nach Anspruch 5, dadurch gekennzeichnet, daß die Haken (22) auf einer Geraden verschiedenen Hakenebenenscharen zugeordnet sind.

7. Haftverschlußteil nach einem der Ansprüche 1 bis 6, dadurch gekennzeichnet, daß die Anordnung der Haken (12, 22) sich als Rapport (15, 25) über die ganze Länge und Breite des bandförmigen Trägers wiederholt.

8. Haftverschluß nach Anspruch 7, dadurch gekennzeichnet, daß der sich wiederholende Rapport (15, 25) aus einer Anzahl von Haken besteht, die durch vier teilbar ist.

9. Haftverschlußteil nach Anspruch 9, dadurch gekennzeichnet, daß der von den Haken gebildete Rapport (15, 25) quadratisch ist.

10. Haftverschlußteil nach einem der Ansprüche 1 bis 9, dadurch gekennzeichnet, daß die Anzahl der den verschiedenen Hakenebenenscharen zugeordneten Haken etwa gleich groß ist.

11. Vorrichtung zum Formen eines Verschlußteiles nach einem der Ansprüche 1 bis 10 aus einem thermoplastischen Kunststoff, der in plastischem oder flüssigem Zustand dem Spalt zwischen einer Druckwalze und einer gekühlten Formwalze zugeführt wird, die zum Formen der mit Haken besetzten Seite des Verschlußteiles mit nach außen offenen Hohlräumen versehen ist, die die Formen für die biegsamen Haken bilden, wobei beide Walzen in entgegengesetztem Drehsinn antreibbar sind, so daß der beim Durchlaufen durch den Spalt zwischen den Walzen erhärtende Kunststoff im Spalt den Träger und in den Hakenformen die Haken des Verschlußteiles bildet,
dadurch gekennzeichnet,
daß die Formwalze einen ein- oder mehrteiligen Grundkörper (43 bzw. 30) aufweist, der die Oberfläche der Walze bildet, die durch mindestens eine erste und eine zweite Schar von Nuten (34, 44 bzw. 35, 45) unterbrochen ist, von denen die Nuten einer jeden Schar einander parallel sind und die Nuten (34, 44) der ersten Schar sich mit den Nuten (35, 45) der zweiten Schar schneiden, und daß in den Nuten diese ausfüllende Formkörper (36, 39, 46) angeordnet sind, die mit in die Walzenoberfläche mündenden Aussparungen (38, 49) versehen sind, die einen dem Schnitt der Haken (12, 22) längs der Hakenebene entsprechenden Verlauf haben.

12. Vorrichtung nach Anspruch 11, dadurch gekennzeichnet, daß die Nuten (34, 44) der ersten Schar mit den Nuten (35, 45) der zweiten Schar einen rechten Winkel bilden.

13. Vorrichtung nach Anspruch 11 oder 12, dadurch gekennzeichnet, daß gedachte Mittelebenen, die zwischen den Seitenwänden der Nuten (34, 35) beider Scharen verlaufen, bei der ersten Schar die Walzenachse enthaltende Axialebenen und bei der zweiten Schar zur Walzenachse senkrechte Radialebenen sind, daß axiale Formkörper für die Axialnuten (34) der ersten Schar gerade Streifen (39) sind und in ihrem mit Bezug auf die Walzenachse einen Rand senkrecht zur Walzenachse verlaufende Schlitze (41) aufweisen, daß radiale Formkörper für die um die Walzenachse umlaufenden Radialnuten (35) der zweiten Schar entsprechend dem Verlauf der Radialnuten gebogene Streifen sind und an ihrem in Bezug auf die Walzenachse anderen Rand als bei den axialen Formkörpern mit zu den Schlitzen (41) dieser komplementären Schlitze (37) versehen sind, so daß die axialen und radialen Formkörper bei ihrem Sitz in den Nuten dank der Schlitze kammartig ineinandergreifen.

14. Vorrichtung nach Anspruch 13, dadurch gekennzeichnet, daß die Oberfläche des Walzenkörpers aus Ringkörpern (30) gebildet ist, von denen jeder mit kammartig radial nach außen offenen axialen Einschnitten (31) und mindestens auf einer Seite mit umlaufenden, radial nach außen offenen nutenartigen Vertiefungen (32) versehen ist, so daß beim koaxialen Zusammensetzen der Ringkörper mit sich deckenden Einschnitten diese die Axialnuten und die Vertiefungen (32) die Radialnuten bilden.

15. Vorrichtung nach Anspruch 14, dadurch gekennzeichnet, daß die gebogenen Streifen durch in die Radialnuten passende ringförmige Scheiben (36) gebildet sind, wobei die Schlitze (37) in den Scheiben (36) im radial äußeren Rand und die Schlitze (41) in den geraden Streifen (39) im radial inneren, den Öffnungen der Hakenformen abgekehrten Rand vorgesehen sind.

16. Vorrichtung nach Anspruch 11 oder 12, dadurch gekennzeichnet, daß gedachte Mittelebenen, die zwischen den Seitenwänden der Nuten (44) der ersten Schar verlaufen mit der Walzenachse einen ersten Winkel und die entsprechenden gedachten Mittelebenen der zweiten Schar mit der Walzenachse einen zweiten Winkel bilden, daß die Mittelebenen jeweils einer Schar in gleichen Abständen voneinander angeordnet sind und die Abstände in beiden Scharen so gewählt sind, daß die Schnittgeraden der Mittelebenen beider Scharen in Axialebenen liegen, die die Walzenachse enthalten, so daß die Nuten (44, 45) beider Scharen zickzackförmig verlaufende Axialnuten bilden, die von geraden, entsprechend zickzackförmig gebogenen Formkörpern (46) ausgefüllt sind, die an ihren durch die Zickzackform gebildeten Ecken (47) mit Abflachungen (48) versehen sind.

17. Vorrichtung nach Anspruch 16, dadurch gekennzeichnet, daß der erste und der zweite Winkel 45° sind.

18. Vorrichtung nach einem der Ansprüche 11 bis 17, dadurch gekennzeichnet, daß die Nuten (34, 44 bzw. 35, 45) der ersten und der zweiten Schar von einander parallelen ebenen Seitenwänden begrenzt sind.

19. Vorrichtung nach einem der Ansprüche 11 bis 18, dadurch gekennzeichnet, daß Aussparungen die die Formen für die Haken bilden, als Durchbrüche (38, 42) ausgebildet sind.

## Claims

1. Fastener element
a) which on one active side of a flat substrate (11, 21) is equipped with a large number of pliant hooks (12, 22) provided for hooking up to hooking means on a second fastener element,
b) wherein each hook (12, 22) features a foot element (13) joined to the substrate (11, 21) and is bent at its free end to form a hook element (14) which defines a hook plane, and the hook planes defined in this manner constitute an array of planes parallel to one another,
c) wherein the hook elements (14) feature at least four mutually distinct orientations and form at least two arrays of hook planes, the hook planes of one array being set at an angle to the hook planes of the other array,
d) wherein the hooks (12, 22) are arranged in groupings (15, 25),
characterised in that the hook elements (14) of the hooks (12, 22) of each grouping (15, 25) feature the not less than four mutually distinct orientations.

2. Fastener element according to claim 1, characterised in that the angle is 90°.

3. Fastener element according to claim 2, characterised in that the substrate (11, 21) is ribbon-shaped and the hook planes extend in the longitudinal and transverse directions of the ribbon.

4. Fastener element according to claim 2, characterised in that the hook planes form an angle of 45° with the longitudinal axis of the ribbon.

5. Fastener element according to claim 3, characterised in that the individual hooks (12, 22) are arranged on straight lines which extend in the transverse direction and in the longitudinal direction of the ribbon.

6. Fastener element according to claim 5, characterised in that the hooks (22) on a straight line are assigned to different arrays of hook planes.

7. Fastener element according to any of claims 1 to 6, characterised in that the configuration of the hooks (12, 22) repeats itself as a register round of pattern (15, 25) over the entire length and breadth of the ribbon-shaped substrate.

8. Fastener element according to claim 7, characterised in that the self-repeating register round of pattern (15, 25) consists of a number of hooks that is divisible by four.

9. Fastener element according to claim 9, characterised in that the register round of pattern (15, 25) constituted by the hooks is square.

10. Fastener element according to any of claims 1 to 9, characterised in that approximately the same number of hooks is assigned to the various arrays of hook planes.

11. Apparatus for moulding a fastener element according to any of claims 1 to 10 from a thermoplastic polymer which in a plastic or liquid state is supplied to the gap between a pressing roller and a cooled shaping roller which, for shaping the face of the fastener element that is occupied by hooks, is provided with outward-opening cavities which constitute the moulds for the pliant hooks, the two rollers being adapted to be driven in opposite directions of rotation, with the result that as the polymer hardens during its progress through the gap between the rollers it forms the substrate in the gap and forms the hooks of the fastener element in the hook moulds,
characterised in that
the shaping roller has a single-part or multi-part basic body (43 and 30, respectively) which constitutes the surface of the roller, which is interrupted by at least a first and a second array of grooves (34, 44 and 35, 45, respectively), of which the grooves of any one array are parallel to one another and the grooves (34, 44) of the first array intersect with the grooves (35, 45) of the second array, and that arranged in the grooves are mouldings (36, 39, 46) which fill them and are provided with recesses (38, 49) which open out into the roller surface and have a profile that matches the sectional profile of the hooks (12, 22) along the hook plane.

12. Apparatus according to claim 11, characterised in that the grooves (34, 44) of the first array form a right angle with the grooves (35, 45) of the second array.

13. Apparatus according to claim 11 or 12, characterised in that notional median planes which run between the side walls of the grooves (34, 35) of both arrays are axial planes containing the roller axis in the case of the first array and are radial planes perpendicular to the roller axis in the case of the second array, that axial mouldings for the axial grooves (34) of the first array are straight strips (39) and in their one edge with respect to the roller axis they have slits (41) running perpendicular to the roller axis, that radial mouldings for the radial grooves (35) of the second array which run around the roller axis are strips bent to match the profile of the radial grooves and on their edge, with respect to the roller axis, other than in the case of the axial mouldings, they are provided with slits (37) complementary to the slits (41) thereof, with the result that thanks to the slits the axial and radial mouldings mesh in a comb-like manner with one another when seated in the grooves.

14. Apparatus according to claim 13, characterised in that the surface of the roller body is constituted by annular bodies (30), each of which is provided with axial incisions (31) opening in a comb-like manner radially outwards and at least on one face is provided with all-round, radially outward-opening groove-like depressions (32), with the result that when the annular bodies are placed coaxially together with their incisions coinciding, the latter form the axial grooves and the depressions (32) the radial grooves.

15. Apparatus according to claim 14, characterised in that the bent strips are constituted by ring-shaped discs (36) which fit into the radial grooves, the slits (37) in the discs (36) being provided in the radial outer edge and the slits (41) in the straight strips (39) being provided in the radially inner edge which faces away from the openings in the hook moulds.

16. Apparatus according to claim 11 or 12, characterised in that notional median planes which run between the side walls of the grooves (44) of the first array form a first angle with the roller axis and the corresponding notional median planes of the second array form a second angle with the roller axis, that the median planes of any one respective array are arranged equidistantly from one another and the spacings in the two arrays are chosen in such a manner that the straight lines intersecting the median planes of the two arrays lie in axial planes which contain the roller axis, with the result that the grooves (44, 45) of the two arrays form axial grooves running in a zig-zag line, which are filled by straight mouldings (46) correspondingly bent in a zig-zag shape, which are equipped with flattened portions (48) at their corners (47) formed by the zig-zag shape.

17. Apparatus according to claim 16, characterised in that the first and the second angle are 45°.

18. Apparatus according to any of claims 11 to 17, characterised in that the grooves (34, 44 and 35, 45, respectively) of the first and second arrays are delimited by mutually parallel, plane side walls.

19. Apparatus according to any of claims 11 to 18, characterised in that recesses constituting the moulds for the hooks are configured as through-holes (38, 42).

## Revendications

1. Elément de fermeture à crochets
a) qui sur un côté actif d'un support plat (11, 21), est muni de plusieurs crochets flexibles (12, 22), prévus pour l'accrochage avec des moyens d'accrochage d'un second élément de fermeture à crochets,
b) dans lequel chaque crochet (12, 22) présente un élément de base (13) assemblé avec le support (11, 21) et à son extrémité libre, est coudé vers un élément de crochet (14) qui définit un plan de crochet et dans lequel les plans de crochets ainsi définis forment un groupe de plans parallèles les uns aux autres,
c) dans lequel les éléments de crochet (14) présentent au moins quatre orientations différentes l'une de l'autre et forment au moins deux groupes de plans de crochets, les plans de crochets d'un groupe formant un angle avec les plans de crochets de l'autre groupe,
d) dans lequel les crochets (12, 22) sont disposés en groupes (15, 25), caractérisé en ce que les éléments de crochet (14) des crochets (12, 22) de chaque groupe (15, 25) présentent au moins les quatre orientations différentes l'une de l'autre.

2. Elément de fermeture à crochets selon la revendication 1, caractérisé en ce que l'angle est de 90°.

3. Elément de fermeture à crochets selon la revendication 2, caractérisé en ce que le support (11, 21) est en forme de bande et en ce que les plans de crochets s'étendent dans le sens longitudinal et transversal de la bande.

4. Elément de fermeture à crochets selon la revendication 2, caractérisé en ce que les plans de crochets forment avec l'axe longitudinal de la bande un angle de 45°.

5. Elément de fermeture à crochets selon la revendication 3, caractérisé en ce que les crochets (12, 22) individuels sont disposés sur des droites qui s'étendent dans le sens transversal et dans le sens longitudinal de la bande.

6. Elément de fermeture à crochets selon la revendication 5, caractérisé en ce que les crochets (22) sur une droite sont affectés à différents groupes de plans de crochets.

7. Elément de fermeture à crochets selon l'une quelconque des revendications 1 à 6, caractérisé en ce que la disposition des crochets (12, 22) est reproduite en tant que rapport (15, 25), sur toute la longueur et la largeur du support en forme de bande.

8. Elément de fermeture à crochets selon la revendication 7, caractérisé en ce que le rapport (15, 25) se reproduisant comprend un nombre de crochets qui est divisible par quatre.

9. Elément de fermeture à crochets selon la revendication 8, caractérisé en ce que le rapport (15, 25) formé par les crochets est carré.

10. Elément de fermeture à crochets selon l'une quelconque des revendications 1 à 9, caractérisé en ce que le nombre de crochets affectés aux différents groupes de plans de crochets est à peu près identique.

11. Dispositif de moulage d'un élément de fermeture selon l'une quelconque des revendications 1 à 10, réalisé dans une matière thermoplastique qui à l'état pâteux ou fluide, est amenée dans la fente entre un cylindre compresseur et un cylindre de moulage refroidi qui pour le moulage du côté de l'élément de fermeture occupé par des crochets, est muni de cavités ouvertes vers l'extérieur et formant les moules pour les crochets flexibles, les deux cylindres pouvant être entraînés dans un sens de rotation opposé si bien que le plastique durcissant lors du passage par la fente entre les cylindres forme dans la fente, le support et dans les moules de crochets, les crochets de l'élément de fermeture, caractérisé en ce que le cylindre de moulage présente un corps de base (43 et 30) en une ou plusieurs parties qui forme la surface du cylindre qui est interrompue par au moins un premier et un second groupe d'encoches (34, 44 et 35, 45) dont les encoches de chaque groupe sont parallèles les unes aux autres et dont les encoches (34, 44) du premier groupe croisent les encoches (35, 45) du second groupe et en ce que dans les encoches sont disposés ces corps moulés (36, 39, 46) remplissant ces dernières et munis d'évidements (38, 49) débouchant dans la surface du cylindre et présentant un tracé correspondant à la coupe des crochets (12, 22) le long du plan de crochets.

12. Dispositif selon la revendication 11, caractérisé en ce que les encoches (34, 44) du premier groupe forment un angle droit avec les encoches (35, 45) du second groupe.

13. Dispositif selon la revendication 11 ou la revendication 12, caractérisé en ce que des plans médians imaginaires qui passent entre les parois latérales des encoches (34, 35) des deux groupes, sont pour le premier groupe, des plans axiaux contenant l'axe du cylindre et pour le second groupe, des plans radiaux verticaux par rapport à l'axe du cylindre, en ce que des corps moulés axiaux pour les encoches axiales (34) du premier groupe sont des bandes (39) droites et présentent sur un de leur bord en référence à l'axe du cylindre, des fentes (41) verticales par rapport à l'axe du cylindre, en ce que des corps moulés radiaux pour les encoches radiales (35) du second groupe placées sur le pourtour de l'axe du cylindre sont des bandes coudées selon le tracé des encoches radiales et sont munis sur leur autre bord que celui utilisé dans le cas des corps moulés axiaux, en référence à l'axe du cylindre, de ces fentes (37) complémentaires des fentes (41) si bien que grâce aux fentes, les corps moulés axiaux et radiaux s'emboîtent comme un peigne, lors de leur ajustement dans les encoches.

14. Dispositif selon la revendication 13, caractérisé en ce que la surface du corps du cylindre est formée de corps annulaires (30) dont chacun est muni d'entailles (31) axiales, ouvertes vers l'extérieur radialement et analogues à un peigne et au moins sur un côté, d'évidements (32) analogues à des encoches, ouverts vers l'extérieur radialement et placés sur le pourtour de telle sorte que lors du montage coaxial des corps annulaires, les entailles qui se recouvrent, forment les encoches axiales et les évidements (32), les encoches radiales.

15. Dispositif selon la revendication 14, caractérisé en ce que les bandes coudées sont formées par des disques (36) annulaires ajustés dans les encoches radiales, les fentes (37) étant prévues dans les disques (36) sur le bord extérieur radial et les fentes (41) étant prévues dans les bandes (39) droites, sur le bord intérieur radial et opposé aux ouvertures des moules de crochets.

16. Dispositif selon la revendication 11 ou la revendication 12, caractérisé en ce que des plans médians imaginaires qui passent entre les parois latérales des encoches (44) du premier groupe, forment avec l'axe du cylindre un premier angle et en ce que les plans médians imaginaires correspondants du second groupe forment avec l'axe du cylindre, un second angle, en ce que les plans médians respectivement d'un groupe sont disposés à égale distance l'un de l'autre et en ce que les distances dans les deux groupes sont choisies de telle sorte que les droites d'intersection des plans médians des deux groupes se trouvent dans des plans axiaux qui comprennent l'axe du cylindre si bien que les encoches (44, 45) des deux groupes forment des encoches axiales en zigzag remplies par des corps moulés droits, coudés en zigzag de manière correspondante et munis d'aplatissements (48) sur leurs angles (47) formés par le tracé en zigzag.

17. Dispositif selon la revendication 16, caractérisé en ce que le premier angle et le second angle sont de 45°.

18. Dispositif selon l'une quelconque des revendications 11 à 17, caractérisé en ce que les encoches (34, 44 et 35, 45) du premier et du second groupe sont limitées par des parois latérales planes, parallèles les unes aux autres.

19. Dispositif selon l'une quelconque des revendications 11 à 18, caractérisé en ce que des évidements qui forment les moules pour les crochets, sont réalisés comme ouvertures (38, 42).
